# EUROPEAN PATENT SPECIFICATION

(11) **EP 0 668 305 B1**
(45) Date of publication and mention of the grant of the patent: **13.11.1996**
(21) Application number: 94120503.1
(22) Date of filing: 23.12.1994
(51) Int. Cl.: C08G 18/66, C08G 69/44, C09D 177/12, C08G 63/48

(54) **Environmentally friendly autoxidisable alkyd coating composition**
Umweltfreundliche selbstoxidierbare Alkydüberzugsmittelzusammensetzung
Composition de revêtement non polluante d'alkyde autoxydable

(30) Priority: 21.01.1994 GB 9401154
(43) Date of publication of application: 23.08.1995
(73) Proprietor: IMPERIAL CHEMICAL INDUSTRIES PLC, London SW1P 3JF (GB)
(72) Inventor: Bovey, Denis Malcolm Harvey, Slough, Berkshire SL1 5DH (GB)
(74) Representative: Cooper, Alan Victor

(56) References cited:
- WO-A-88/03153
- DE-A- 1 198 556

## Description

This invention relates to environmentally friendly autoxidisable film-forming alkyd coating compositions such as paint, varnish or woodstain and especially to coating compositions suitable for application by brush at ambient temperatures (e.g. 18°C) to architectural surfaces such as those found on buildings or their fittings or furnishings. It also relates to autoxidisable film-forming material for use in the coating compositions.

"Autoxidisable" is sometimes referred to as "drying" or "air drying". All three terms mean that when a coating of the autoxidisable film-forming material is applied to a surface and exposed to air in the presence of an autoxidation catalyst (such as cobalt octoate or naphthenate), the alkyd polymer will crosslink or "dry" to form a macromelecular film by oxidation involving the olefinic unsaturation which is found in alkyd polymers. The macromelecular film serves to protect the surface and to bind together any non-film-forming components of the coating composition such as pigments and extenders. It is therefore sometimes called a protective binder material.

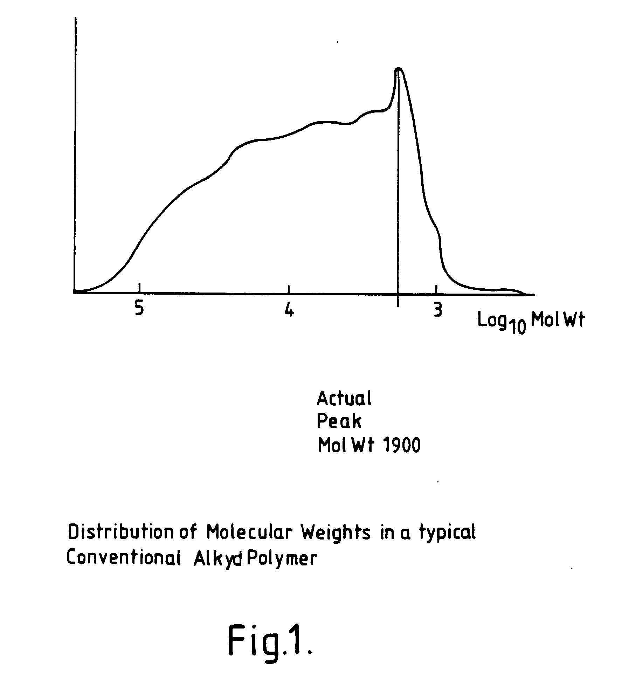

Alkyd polymers are amongst the oldest protective binder materials used in paints. The alkyd polymers generally used in coating compositions for architectural surfaces usually comprise high molecular weight dicarboxylate polymer chains having an approximately uniform distribution of molecular weights as illustrated in Figure 1 of the drawings. The molecular weights usually extend over a range of about 200 (or more usually 300) to 200,000 with typically about 20 to 25wt% of the polymer chains having molecular weights in the range of 1,500 to 3,500, about 50 to 60wt% having molecular weights in the range 3,500 to 100,000 and about 25 to 35wt% having molecular weights in the range 5,000 to 100,000. About 2 to 15wt% of the chains have molecular weights above 100,000 and although this is a small proportion, it has been discovered that these high molecular weight chains assist alkyd paints to dry quickly at ambient temperatures. This is particularly important if coatings applied in a thickness of from 100 to 200µm are to be able to dry without wrinkling. 1µm is 10⁻⁶m. The ratio Mz/Mw for a typical alkyd polymer is often about 2.7 to 3.0 where Mz represents Z average molecular weight and Mw represents weight average molecular weight. A full definition of Mz is given on pages 127 to 129 of the second edition of the book "Principles of Polymer systems" by F Rodriguez and published 1983 by McGraw-Hill International of London. Pages 127 to 129 are herein incorporated by reference. A technique for measuring molecular weights is given later in this specification.

Conventional alkyd polymers for use in paints suitable for application at ambient temperatures are dicarboxylates made by esterifying an aromatic dicarboxylic acid or its anhydride with a substituted polyol which is an alcohol or ether alcohol originally containing at least three alcoholic hydroxyl groups of which usually two remain unsubstituted and therefore free to esterify pairs of dicarboxylic acid or anhydride molecules whilst most of the remainder are substituted by an autoxidisable hydrocarbylcarbonyloxy moiety, i.e. 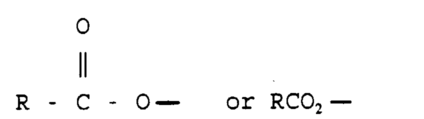 where R is a partially olefinically unsaturated hydrocarbon chain such as is found in linolenic acid. Autoxidisable hydrocarbylcarbonyloxy moieties are often called "oils" in the paint industry. Alkyl polymers containing large proportions (eg. over 60wt%) of the moieties are called "long oil" alkyds whereas those containing less than 45wt% are "short oil" alkyds and those beween are "medium oil" alkyds.

Esterification involves heating together the reactants and in the past, the esterification was often performed using fused reactants. Unfortunately, fusion causes sublimation of reactants some of which are toxic and sublimation may also give rise to partial blockages in industrial systems as a result of sublimed material resolidifying. Therefore, nowadays industrial esterifications are preferably performed by heating the reactants in azeotropic solvents when making alkyd polymers for architectural paints. A solution process is also easier to control and the use of solvents which are azeotropic facilitates the removal of the water produced in the esterification reaction.

Typical dicarboxylic acid reactants include isophthalic, succinic, adipic and sebacic acids whilst phthalic anhydride is typical of the anhydrides. Typical alcoholic polyols include alcohols and ether alcohols such as trimethylol propane, glycerol, sorbitol, mannitol, glucose, pentaerythritol, di- and tripentaerythritol and di-trimethylolpropane. Typical autoxidisable hydrocarbylcarbonyloxy moieties include those derivable from autoxidisable natural oils such as linseed, cottonseed, corn, rapeseed, soya bean, tung and tall oils. The groups will contain between 12 and 30 (usually 16 or 18) carbon atoms some of which will be linked by olefinic double bonds. Whilst the products obtained from a conventional process for making alkyd polymer are too complex to merit a simple chemical formula, it is probable that an alkyd dicarboxylate polymer made using isophthalic acid and a substituted pentaerythritol would contain a predominant proportion of units as represented below 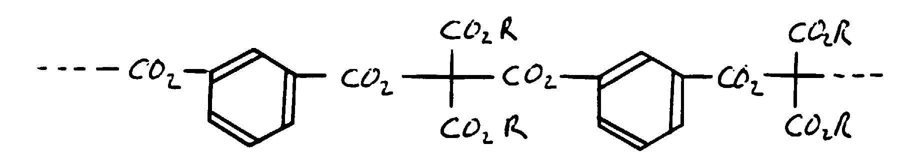 with the possibility of chain branching if more than two of the alcoholic hydroxy groups have remained unsubstituted which can occur to some extent.

In the above formula + represents 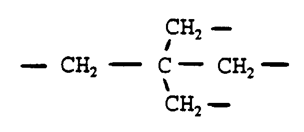 and RCO₂- represents a hydrocarbylcarbonyloxy moiety made autoxidisable by the presence of olefinic unsaturation in the hydrocarbyl part of the moiety.

Esterification is usually performed until the acid value of the alkyd ester has fallen to below 16mgKOH/g of the ester. A typical alkyd polymer suitable for use in architectural paints can therefore in principle be described as a high molecular weight polymeric aromatic dicarboxylic ester of low acid value (eg. below 16 mgKOH/g of the ester) containing mainly divalent esterifying groups which are substituted polyols substituted by at least one autoxidisable hydrocarbylcarbonyloxy or "oil" moiety. It has been discovered that the alkyd polymer must have an approximately uniform distribution of molecular weights including a small, but significant proportion of molecular weights above 100,000 in order that the paint may dry quickly.

Conventional alkyd polymers have the advantage of being largely derivable from agricultural products which can be made from renewable sources. They are also easily biodegraded when buried in landfill sites which is advantageous when large quantities of waste paint need to be discarded. However alkyd polymers (at least when made by esterifications performed in solution) have the intrinsic problem of being extremely viscous liquids owing to the large proportion of polymer chains having molecular weights in the range 3500 to 100,000 and especially in the range 5000 to 100,000. For example, attempts to measure accurately the viscosity at 25°C of a 99wt% solution of a typical alkyd resin in xylene using the bubble tube technique fail, because the viscosity of the solution is found to be well over 300 stokes (ie. 300x10⁻⁴m²/s). Therefore in nearly all cases it has been necessary to dissolve the alkyd polymer in large amounts of volatile organic solvent to obtain a paint having a viscosity of about 2 to 10 poise (ie. 0.2 to 1 Pa.sec) and preferably 5 poise so that it can be applied by brush at ambient temperatures to produce thick coatings which may be up to 200µm thick. Traditional liquid alkyd paints contain as much as 30wt% or more of volatile organic solvent which is usually a hydrocarbon liquid such as white spirit. Volatile organic solvents have a boiling point of up to 250°C at 1 bar and so, as the paint dries, the solvent evaporates creating environmental pollution and also localised unpleasant smells. In 1980, a new standard (RAL-UZ-12a or "Blauer Engel") for low polluting paints was introduced. The new standard calls for paints to contain at least 85wt% non-volatile material (sometimes called "solids" for brevity) which in effect means that the paints must contain less than 15wt% volatile organic solvent.

This high viscosity problem is a particular nuisance in so-called "non-drip" paints. Alkyd "non-drip" paints have a thixotropic gel structure which may be imparted, for example, by reacting a polyamide with the alkyd resin at elevated temperatures as described in United States Patent Specification US 2 663 649 published in 1953 or Deutsche Auslegeschrift DE 1 198 556 published in 1965. An alkyd "non-drip" paint will generally have a gel strength of at least 150 g.cm as measured by the technique described later. When the paint is brushed onto a surface, the gel is temporarily broken down by the shear forces imparted by the brush and the paint is temporarily converted to a viscous liquid. However, the intrinsic viscosity of the polyamide-modified alkyd polymers used in thixotropic gels is even greater than that of conventional alkyd polymers and so even more volatile organic solvent has to be present to ensure that alkyd "non-drip" paints can be applied by brush. Accordingly, traditional "non-drip" alkyd paints contain over 40wt% of the solvent. Moreover, many thixotropic alkyd polymers sold for use in formulating "non-drip" paints are so intrinsically viscous that they have to be supplied as solutions containing as much as 50wt% of the volatile organic solvent in order to allow them to be formulated into "non-drip" paints.

Simple attempts to reduce the amount of solvent used in an alkyd paint would, of course, re-introduce the high viscosity problem mentioned above which would make the paint difficult to apply by brush. Therefore much attention has been directed to the replacement of at least some of the volatile organic solvent by relatively involatile reactive autoxidisable liquids which are sometimes known as "reactive diluents". The reactive diluents dilute the viscous alkyd polymer sufficiently to enable it to be brushed onto a surface yet they are not lost as pollutants into the atmosphere by evaporation from the drying coating. Instead, once the paint has been applied to the surface, the reactive diluents autoxidise along side the alkyd polymer and they crosslink (probably with the polymer) so becoming part of the macromolecular film. Therefore the reactive diluent no longer exists as a liquid which would either slowly evaporate causing pollution or would remain in the coating and therefore detract from the hardness of the film. An early example of this approach is provided by United States Patent Specification US 4 311 624 (published in 1982) which discloses alkyd paints containing an involatile reactive diluent which is a dicyclopentenyloxyalkyl ester of an autoxidisable ethylenically unsaturated carboxylic acid such as acrylic or methacrylic acid, i.e. 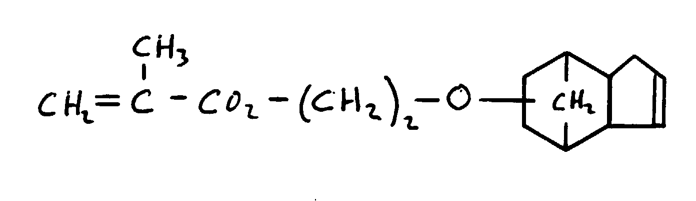 Unfortunately, thick coatings of such paints were found to dry (i.e. autoxidise) too slowly.

Faster drying alkyd paints are provided by European Patent Specification EP 0 253 474A (published in 1988) which discloses alkyd paints containing a reactive diluent which comprises a polysubstituted alkane containing at least one autoxidisable hydrocarbylcarbonyloxy moiety and also at least one relatively quickly autoxidisable allyloxy moiety and wherein the total number of autoxidisable moieties is at least three, for example 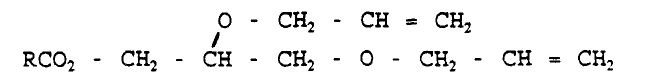 More specifically, the reactive diluents are hydrocarbylcarbonyloxy and allyloxy derivatives of polyhydroxy alcohols such as trimethylol propane, glycerol and pentareythritol. The reactive diluent shown above and illustrated by Example 1 of EP 0 253 474A is a substituted trimethylol propane containing one autoxidisable hydrocarbylcarbonyloxy moiety and two autoxidisable allyloxy moieties. The presence of the allyloxy moieties confers a good initial rate of autoxidation on alkyd paints containing the reactive diluent, but the later stages which confer hardness on the film are unsatisfactory and in particular the scratch resistance (i.e. hardness) of the film is poor.

European Patent Specification EP 0 357 128A (published in 1990) discloses that the hardness of autoxidised films obtained from alkyd paints containing allyloxy reactive diluents can be improved by using the reactive diluent in combination with an autoxidisable reactive oligomer. The reactive oligomer comprises a polycarboxylic ester (more particularly trimellitic ester) containing three highly autoxidisable ester moieties which are polysubstituted etheralkyl moieties (more particularly dipentaerythrityl groups) each in turn substituted by five autoxidisable hydrocarbylcarbonyloxy moieties of the type found in conventional alkyd polymers. An oligomer of this type derived from trimellitic anhydride and substituted dipentaerythritol is also too complex to merit a simple chemical formula, but it is probable that the predominant species can be indicated by the following formula: 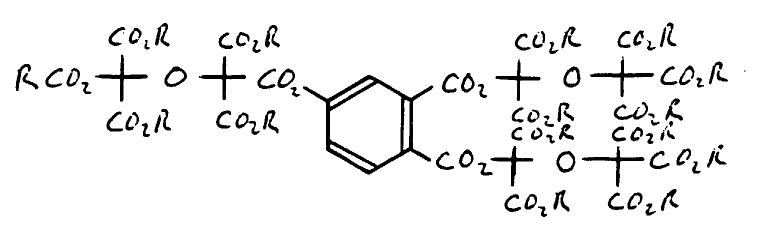 where + o + represents

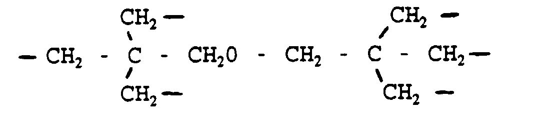

The autoxidisable reactive oligomer improves film hardness but its presence in combination with the more rapidly autoxidisable allyloxy reactive diluent complicates the formulation of coating compositions and is a classic source of toxic bi-products.

World Patent Application WO88/03153 (published in 1988) discloses an alternative approach to reducing the amount of solvent needed in alkyd paints intended for architectural uses. WO88/03153 discloses a single step esterification of di- or polycarboxylic acids or their anhydrides in the presence of conventional autoxidisable hydrocarbylcarboxylic acids (ie fatty acids with autoxidisable long chains). By choosing polyols comprising at least 80wt% of dipentaerythritol or ditrimethylolpropane, WO88/03153 was able to achieve relatively high molecular weight film-forming materials which nevertheless had low viscosities and could therefore be used in paints containing as little as 15wt% organic solvent. However, WO88/03153 does not specify the molecular weight distribution present in its film-forming materials and in particular materials capable of giving 85wt% solids in paints were found to be deficient in polymer chains having molecular weights above 100,000. Therefore thick coatings of paints made using the materials were found to dry slowly at ambient temperatures as compared with conventional alkyd paints. In addition, at least 80wt% of the polyol must be either dipentaerythritol or ditrimethylol propane even though ether alcohols such as dipentaerythtritol are expensive reactants.

An object of this invention is to provide an easily formulated environmentally friendly autoxidisable alkyd coating composition which is capable of containing at least 85wt% of non-volatile material, (ie. not more than 15wt% volatile organic solvent) comprising film-forming material able to be made by an industrial esterification performed in solution and optionally non-film-forming material such as pigment or extender and which has a viscosity suitable for application by brush to architectural surfaces at ambient temperature (e.g. 18°C) and which when applied in coatings up to 200µm thick dries quickly without wrinkling to give a hard, non-sticky, scratch-resistant protective binder film similar to those obtained from more conventional alkyd coating compositions. Objects of modifications of the invention are to promote the use of cheaper polyols such as pentaerythritol.

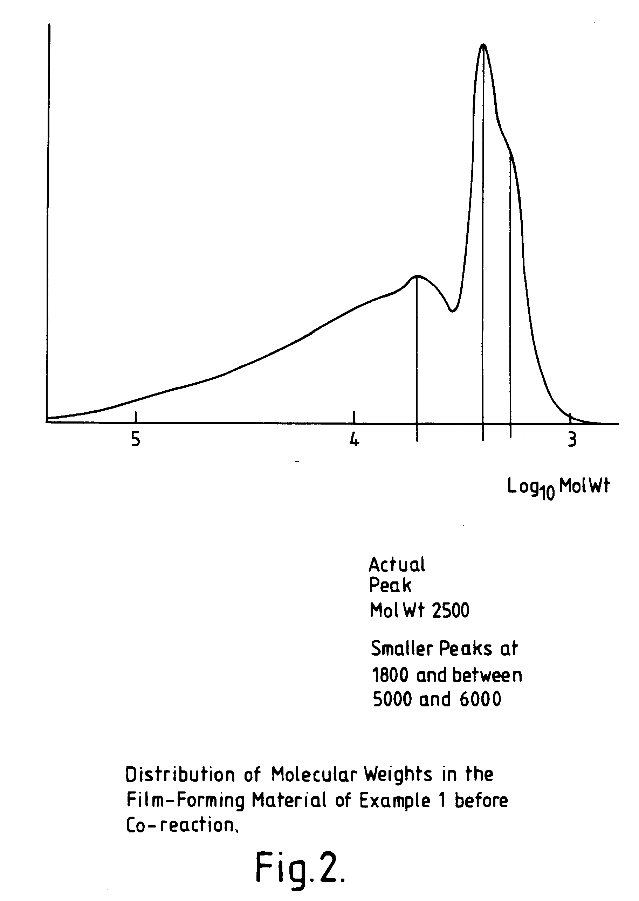

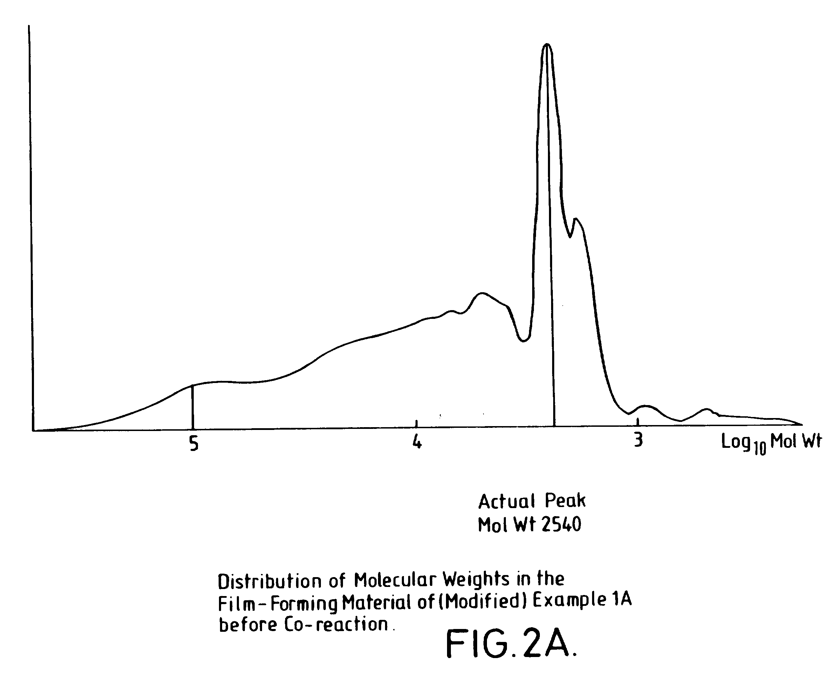

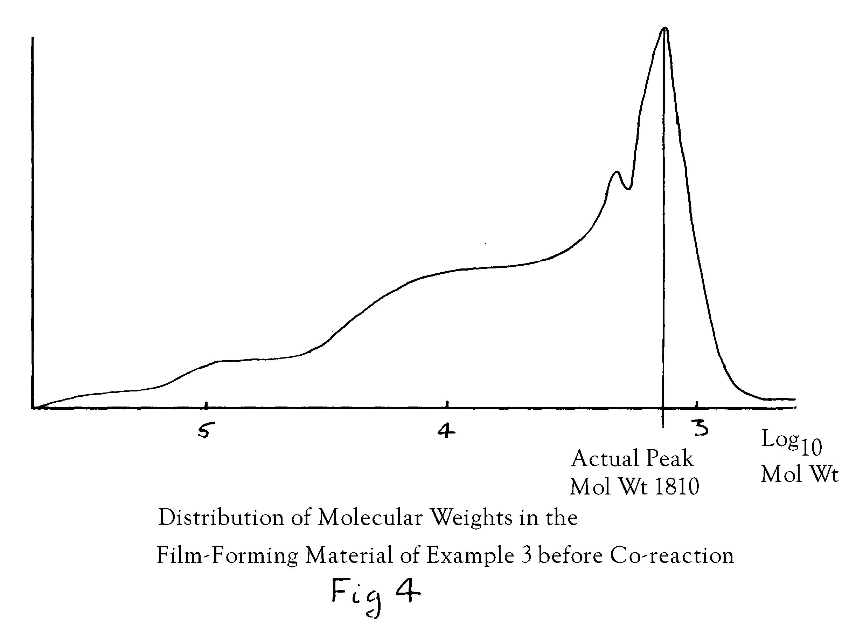

Accordingly, this invention provides an environmentally friendly autoxidisable alkyd coating composition containing autoxidation catalyst and film-forming material containing autoxidisable alkyd polymer moieties and in which at least a portion of the film-forming material has been chemically co-reacted with polyamide or with a polyamine/polyisocyanate combination to produce a co-reaction product wherein
(a) before the co-reaction, the film forming material has a Z average molecular weight (as determined using gel permeation chromatography) of at least 30,000, a viscosity of less than 34 (preferably less than 27) stokes (ie 10⁻⁴m²/s) when measured at 25°C as a 99wt% solution in xylene at 25°C and a non-uniform distribution of molecular weights (as determined by gel permeation chromatography) which has a peak in the range 1,500 to 3,500 and where at least 25wt% of the film-forming material has a molecular weight in the range 1,500 to 3,500 and
(b) moieties derived from the co-reacted polyamide or polyamine/polyisocyanate combination amount to 2 (and preferably 3) to 15wt% of the portion which has been co-reacted.
A typical molecular weight distribution for the film-forming material is illustrated by Figures 2, 2A, 3 and 4. The molecular weight distributions may be determined by gel permeation chromatography using the technique described in more detail later in this Specification. Viscosity can be conveniently measured using a bubble tube technique.

The selected distribution of molecular weights (before co-reaction) combined with the moieties derived from the co-reaction with polyamide or the polyamine/polyisocyanate combination produces a bio-degradable film-forming material obtainable largely from renewable resources which can be used to formulate coating compositions which may contain as much as 85wt% solids or conversely as little as 15wt% volatile organic solvent, yet which can be brushed onto a surface at 18°C to produce sag-resistant coatings of a thickness of up to at least 200µm which can dry quickly without wrinkling to give a dry, non-sticky, hard, scratch-resistant protective binder film. In addition (for countries where more than 15wt% of volatile organic solvent can be tolerated), it is possible to produce useful thixotropic alkyd paints containing less than 30wt% of the solvent and in particular it is possible to produce "non-drip" alkyd paints having a gel strength of at least 100 g.cm and containing as little as 15 to 20wt% volatile organic solvent.

It is preferred that (before any co-reaction) at least 26wt% (and most preferably 30wt%) of the film-forming material should have a molecular weight lying in the range 1,500 to 3,500 and that the peak molecular weight should lie in the range 1,800 to 2,500. It is further preferred that at least 2 (and most preferably 4 to 15) wt% of the film-forming material should have a molecular weight of above 100,000 and/or less than 48 (most preferably less than 35)wt% should have a molecular weight in the range 10,000 to 100,000. It is also preferred that the Mz of the film-forming material should be above 50,000 and most preferably above 70,000. The molecular weight distribution may be bi- or polymodal having one or more smaller peaks inside and/or outside the 1,500 to 3,500 range. Preferably the ratio Mz/Mw should exceed 2.8, more preferably 3 and where reasonably possible it is preferred that it should exceed 5.

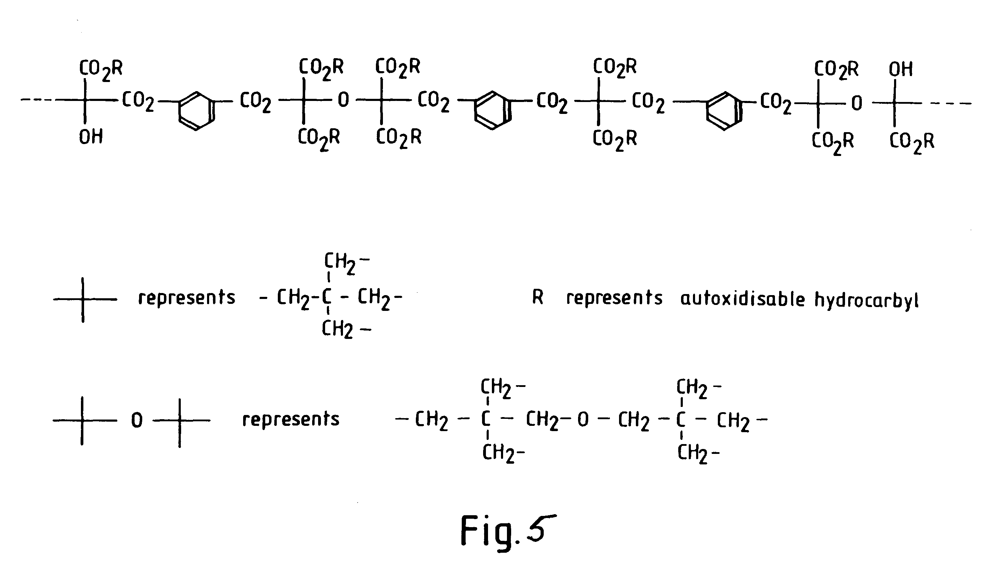

A convenient way to obtain a film-forming composition having the required molecular weight distribution according to this invention is to perform a three step esterification in which a precursor mixture of esters is made (preferably using a solvent process as opposed to a fusion process) in the first step and then in a subsequent step, the precursor esters are reacted (again preferably in solution) with a polycarboxylic acid or anhydride containing at least three carboxylic acid groups or their anhydride to make the film-forming material. The third step comprises the co-reaction with the polyamide or polyamine/polyisocyanate combination. The three step process may be either a "simple" three step esterification process or a "split" three step esterification process. In the simple process, the first step comprises making the precursor mixture of esters by reacting together (for example by heating under reflux at 180 to 250°C) a mixture of the following reactants:
a) an aromatic dicarboxylic acid or its anhydride (for example isophthalic acid or phthalic anhydride),
b) a polyol containing at least five (preferably six) hydroxyl groups (for example dipentaerythritol) optionally together with a polyol containing 3 or 4 hydroxyl groups (for example pentaerythritol) and
c) an autoxidisable hydrocarbyl carboxylic acid containing 12 to 30 carbon atoms (for example the fatty acids derived from the various natural oils known for use in making alkyd paints).
The mixture preferably contains the following molecular percentages of the reactants, namely
a) dicarboxylic acid/anhydride 3 to 10 mol%
b) polyol containing at least five hydroxyls 5 to 15 mol%
polyol alcohol containing three or four hydroxyls 0 to 20 mol%
and c) autoxidisable hydrocarbyl carboxylic acid 60 to 85 mol%
The precursor mixture of esters contains:
1. Long oil (preferably at least 75wt% oil) alkyd polymers which have a low molecular weight (for example polymers having an Mz of from 3,000 to 10,000) and a high hydroxyl value of at least 40. The alkyd polymers contain derivatives of polyols in which preferably only two of the hydroxyls of each polyol have formed ester links to dicarboxylic acid creating diester polymer chains and preferably 80 to 95% of the remaining hydroxyls of the polyol have formed ester links with the autoxidisable hydrocarbylcarboxylic acid thereby imparting autoxidisability to the polymer chains. The remaining unreacted 5 to 20% of hydroxyls impart a high residual hydroxyl value to the alkyd polymer. Again, the alkyd polymer is too complex to merit a simple chemical formula, but the formula indicated in Figure 5 is illustrative of the type of structures which can be expected.
2. Long-oil esters in which some (and preferably all but one or two) of the hydroxyls of each polyol containing at least five hydroxyls have formed ester links with the autoxidisable hydrocarbyl carboxylic acid. A typical formula would be: 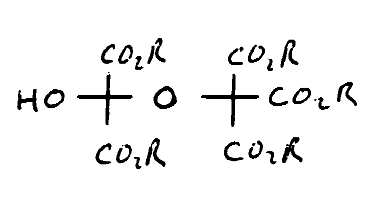
3. Optionally non-polymeric long-oil esters of a polyol containing three or four hydroxyl groups in which all but one or two of the hydroxyl groups have formed ester links with the autoxidisable hydrocarbyl carboxylic acid. A typical formula would be:

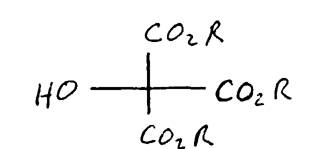

The second step of the simple three step esterification comprises reacting the precursor mixture of esters with the polycarboxylic acid or anhydride. The esters and acid/anhydride are mixed together (preferably as solutions in organic solvent) and are subjected to for example 180 to 250°C to make the film-forming material by esterifying the acid/anhydride with the residual hydroxyls present in the precursor mixture of esters. The amount of polycarboxylic acid or anhydride used should preferably be chosen to ensure very nearly full esterification of the polycarboxylic acid or anhydride and should preferably be sufficient to esterify from 80 to 99% of the theoretical residual hydroxyl present in the precursor mixture of esters. This in practice means that from 2 to 8 mol% and preferably less than 4.5wt% (based on total amount of reactants used in the first step) of polycarboxylic acid should be used. The residual hydroxyls in the precursor mixture of esters occur in both the low molecular weight alkyd polymers and in the long-oil esters derived from the polyols. Therefore the film-forming material contains polycarboxylic esters in which the esterifying moieties include moieties derived from the long oil alkyd polymer and also moieties derived from the long oil esters of the polyols. The film-forming material will also contain residual amounts of the esters of the precursor mixture which have not reacted with the polycarboxylic acid or anhydride. In particular the second mixture will contain residual amounts of the autoxidisable long oil ester of the polyol containing at least five hydroxyls.

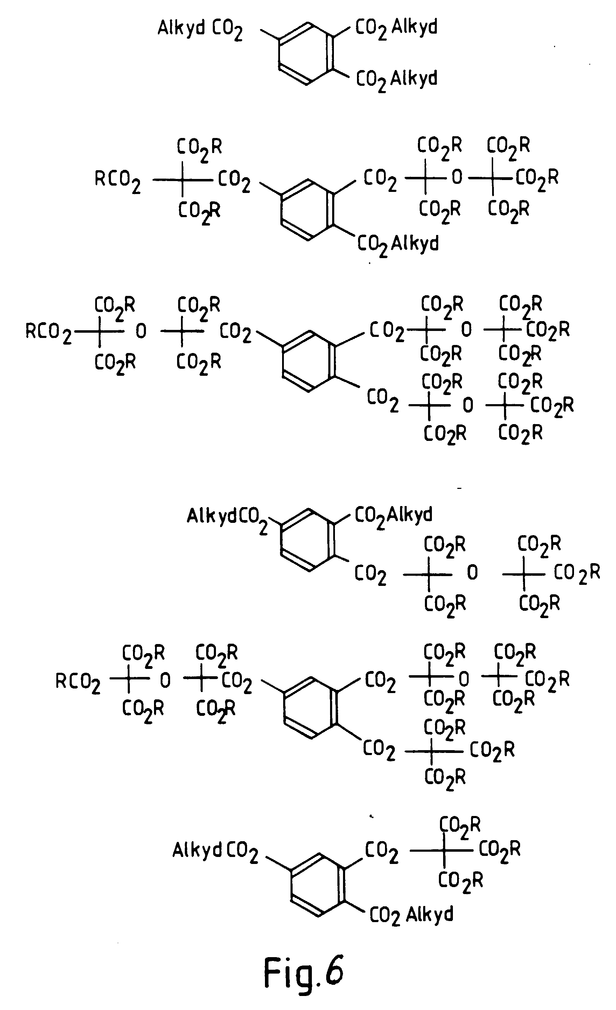

Accordingly, the second step of the simple three step esterification provides a film-forming material according to this invention containing autoxidisable alkyd polymer moieties in which the film-forming material includes esters of a polycarboxylic acid which contains at least three carboxylic acid groups and/or esters of an anhydride of such a polycarboxylic acid wherein the esterifying moieties are chosen from
a) alkyd polymer moieties,
b) moieties derived from a substituted polyol containing at least five hydroxyls prior to substitution up to all but one of which hydroxyls per polyol molecule have been substituted by autoxidisable hydrocarbylcarbonyloxy moieties and optionally
c) moieties derived from a substituted polyol containing three or four hydroxyls prior to substitution up to all but one of which have been substituted by autoxidisable hydrocarbylcarbonyloxy moieties.
Typical formulae for representative polycarboxylic esters are illustrated diagrammatically in Figure 6 of the drawings.

Preferably from 20 to 60 molar% of the esterifying moieties in the polycarboxylic esters are alkyd polymer moieties and 20 to 70 molar% (most preferably 30 to 60%) are moieties derived from the substituted polyol originally containing at least five hydroxyls. Often the esters will also contain up to 20 molar% of moieties derived from the substituted polyol originally containing three or four hydroxyls.

Preferably the coating compositions according to this invention should contain up to about 10 wt% of residual autoxidisable ester of the polyol containing originally at least five hydroxyl groups which residual ester has not reacted with the polycarboxylic acid or anhydride. The coating compositions generally also contain up to 10 wt% of residual autoxidisable ester of the polyol containing originally three or four hydroxyl groups and which too has not reacted with the polycarboxylic acid or anhydride.

The polycarboxylic acids or anhydrides used in the second step preferably contain only three or four carboxylic groups and most preferably three. Typical of these are the tricarboxylic and tetracarboxylic acids or their anhydrides such as trimellitic anhydride or pyromellitic anhydride as shown below:

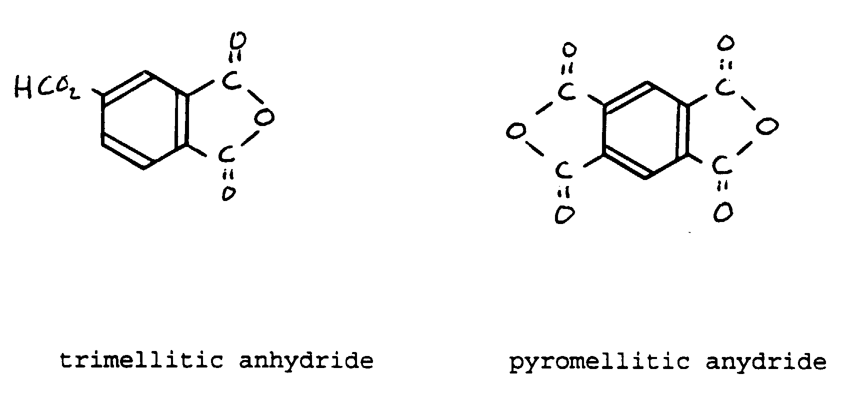

The hydrocarbylcarbonyloxy moieties used in this invention are preferably of a type found in the conventional alkyd paints as described earlier. They derive autoxidisability from the presence of olefinic unsaturation in a linear hydrocarbyl chain and the chain will usually contain from 12 to 30 (usually 16 or 18) carbon atoms.

The polyols used in this invention are also preferably of the type described earlier for use in making alkyd paints. In addition, propylated sorbitols may be used, that is to say the product obtained by condensing at least four (and preferably six) propylene oxide molecules with sorbitol.

The chemical composition of the film-forming material obtained from the simple three step esterification process described above is very complex and this in turn leads to unpredictability which complicates the formulation of coating compositions. In particular it is difficult to predict precisely how much residual autoxidisable non-polycarboxylate ester will be found in the film-forming material. Deficiencies in the amount of autoxidisable non-polycarboxylate ester of the polyol containing at least five hydroxyl groups have been found to lead to increased amounts (for example 35 to 45wt%) of material having a molecular weight in the range 10,000 to 100,000 which adversely effects the viscosity of the ultimate paint. A less complex and more predictable composition is obtainable by using the so-called "split" three step process.

In the split three step process, the first two steps are split into two parallel separate operations which produce separate polycarboxylate esters and the separate polycarboxylate esters are then blended together. More particularly the two steps are split into two separate operations such that
a) in the first step of the first operation, the aromatic dicarboxylic acid is reacted with the polyol and the autoxidisable hydrocarbylcarboxylic acid to form a first mixture of precursor esters (which are long oil alkyd esters) and this first mixture is then reacted in the second step with the polycarboxylic acid or anhydride and
b) in the first step of the second operation, the polyol containing at least five hydroxyl groups is reacted with the autoxidisable hydrocarbylcarboxylic acid to form a second mixture of precursor esters (which are long oil non-alkyd esters) and this second mixture is then reacted in the second step with the polycarboxylic acid or anhydride and
the products of the first and second operations are then blended together to produce the film-forming material. Preferably the non-alkyd mixture of polycarboxylate esters is blended with the alkyd mixture in a weight ratio of from 3 to 0.5:1. The split process has the additional advantage of producing less (usually less then 35wt% and generally 25 to 35wt%) material having a molecular weight in the range 3500 to 100,000 and more having a molecular weight above 100,000. It has also been discovered that the first operation can be performed using polyols containing only 3 or 4 hydroxyl groups (eg pentaerythritol) whilst still permitting the formulation or paints containing at least 85wt% solids.

A modification of this invention makes possible the replacement of polyols containing at least five hydroxyls by polyols containing only four hydroxyls (eg pentaerythritol) in any aspect of this invention and especially in the production of autoxidisable non-alkyd polycarboxylate esters. The modification comprises replacing the polyol containing at least five hydroxyl groups with the molar equivalent amount of a notionally coupled pair of polyols containing at least four hydroxyl groups which are coupled by means of a dicarboxylate link. The polyols are at least notionally coupled in situ by means of dicarboxylic acids/anhydrides such as adipic acid or phthalic anhydride to make a polyol dicarboxylate. It has been discovered that provided the approximate stoichiometric molecular ratio of reactants is used, a polyol dicarboxylate appears to be made which behaves like dipentaerythritol in the formation of the autoxidisable long oil polycarboxylate ester. The precise stoichiometric molar ratio is

| | |
|---|---|
| Autoxidisable hydrocarbylcarboxylic acid | 15 |
| 4-hydroxy polyol | 6 |
| Dicarboxylic acid/anhydride | 3 |

It is prefered that the molar ratio should not vary by more than ±3% from stoichiometric. The precise nature of the coupling action is too uncertain to merit simple explanation, but it is believed that it results in the production of film-forming material in which the polycarboxylic acid/anhydride is esterified by moieties derived from a substituted at least notionally coupled pair of polyhydroxy alcohols each of which contains at least four hydroxyls prior to coupling and substitution by hydrocarbylcarbonyloxy moieties and which are coupled by a dicarboxylate link involving one hydroxyl from each alcohol as indicated below:

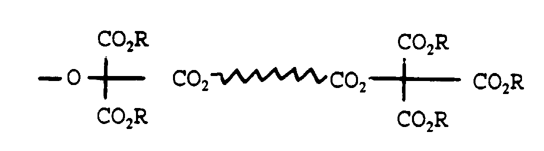

Irrespective of how the film-forming material is made, prior to its formulation into a coating composition, a portion of it (preferably 5 to 15%) is converted to a co-reaction product by chemically co-reacting it with 3 to 15% of its weight of a polyamide or polyamine/polyisocyanate combination. Suitable polyamides are those used to impart thixotropy to alkyd polymers and which are described for example US 2 663 649 (the contents of which are herein incorporated by reference) or DE 1 198 556. A typical polyamide will comprise a polymer made by reacting a dimerised fatty acid with a diamine such as ethylene diamine. Preferably before the co-reaction, the polyamide should have a weight average molecular weight of from 2,000 to 10,000 and most preferably from 3,000 to 5,000.

The co-reaction is conveniently performed by heating the film-forming material and polyamide together at from 180 to 230°C whereupon the polyamide bonds to the film-forming material. The co-reaction is also too complex to permit a precise characterisation but it is presumed that some interchange reactions occur possibly together with reactions involving the evolution of water.

The co-reaction may alternatively be performed with a polyamine/polyisocyanate combination instead of the polyamide. In this case the co-reaction is conveniently performed by first mixing the film-forming material with an amount of polyamine (preferably diamine) sufficient for the combined weights of polyamine and polyisocyanate to equal from 3 to 15 wt% of the film-forming material. This mixture is then heated to preferably 90 to 110°C and an amount of polyisocyanate is added whereupon the polyamine and polyisocyanate react with each other and presumably co-react in some way with the film-forming material to form an essentially polyurea composition bonded to the film-forming material. Again the product is too complex to permit precise description but it is believed that the polyurea bonds to the film-forming material by reaction with carboxylic acid and hydroxyl groups remaining in the material. Presumably a polyurea is formed by a reaction of the type indicated below: 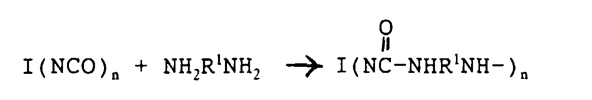 where I and R¹ are the nuclei of the polyisocyanate and the polyamine and n is preferably greater than 2.

Suitable polyureas may be obtained as described in European Patent Specification EP 0 435 428B (published in 1993) or in corresponding United States Patent Specification US 5 164 449 (the contents of which are herein incorporated by reference). A particularly preferred class of polyisocyanates are the isocyanurate trimers such as proprietary heterocyclic material sold as "Desmodur" N3300 available from Bayer AG of Leverkusen in West Germany. "Desmodur" N3300 is believed to consist mainly of the trimer of hexamethylene di-isocyanate and the isocyanurate trimers are believed to have structures which at least approximate to the following: 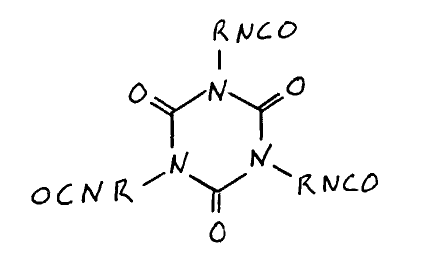 where R¹¹ is hexamethylene divalent linking moiety.

The polyamide- or polyurea-modified film-forming material (ie. the co-reaction product) is preferably obtained by co-reacting from 5 to 15wt% of the material with the polyamide or polyamine/polyisocyanate combination away from the rest of the material and then mixing the co-reacted material back with the un-co-reacted material. This re-mixing of the materials is conveniently performed at the same time as any non-film-forming material is mixed with the film-forming materials.

The co-reacted and un-co-reacted materials are generally obtained as materials containing less than 1wt% volatile organic solvent. They are then diluted with volatile organic solvent (for example white spirit) to facilitate mixing with each other and with non-film-forming materials and to produce a coating composition which may (if desired) contain as much as 85wt% or more of non-volatile material whilst remaining brushable, that is to say whilst having a viscosity of from 2 to 10 (and typically 5) poise (ie. 0.2 to 1 or 0.5 Pa.sec). Examples of non-film-forming materials are those conventionally used in making for example paints, varnishes or woodstains. Such materials include pigments, dyes, extenders, thickeners, fungicides, anti-skinning agents, flow improvers and drying agents.

This invention also provides a modified autoxidisable film-forming material in which the film-forming material includes esters of a polycarboxylic acid which contains at least three carboxylic acid groups and/or esters of an anhydride of such a polycarboxylic acid wherein the esterifying moieties are chosen from
a) alkyd polymer moieties,
b) moieties derived from either a substituted polyol or substituted polyol dicarboxylate containing at least five hydroxyls prior to substitution up to all but one of which hydroxyls per polyol or polyol carboxylate molecule have been substituted by autoxidisable hydrocarbylcarbonyloxy moieties and optionally
c) moieties derived from a substituted polyol containing three or four hydroxyls prior to substitution of which one or two per polyol molecule have been substituted by autoxidisable hydrocarbylcarbonyloxy moieties
and a portion amounting to 5 to 15wt% of the film-forming material has been modified by co-reaction with polyamide or polyamine/polyisocyanate combination in an amount such that from 3 to 15wt% of the film-forming material after modification consists of moieties derived from the polyamide or polyamine/polyisocyanate combination.

Preferably the modified film-forming material comprises a blend of non-alkyd polycarboxylate ester derived from hydrocarbylcarboxyloxy substituted polyol having originally at least five hydroxyls or polyol dicarboxylate with alkyd polycarboxylate ester.

Aspects of the invention and its background are illustrated by the drawings and graphic formulae shown in the figures of which
- Figure 1: is a graph showing the distribution of molecular weights in a conventional alkyd polymer used in decorating architectural surfaces at ambient temperatures.
- Figure 2: is a graph showing on a larger scale the distribution of molecular weights in a film-forming material made according to Example 1, Part C of this Specification.
- Figure 2A: is a graph showing the distribution of molecular weights in a film-forming material made according to the modification of Example 1 described as Example 1A.
- Figure 3: is a graph showing the distribution of molecular weights in a film-forming material made according to Example 2 of this Specification.
- Figure 4: is a graph showing the distribution of molecular weights in a film-forming material of the type made according to Example 3 of this Specification.
- Figure 5: is a graphic formula indicating the type of alkyd polymer which can result from the fist two steps of the esterification as performed in Example 2 of this Specification.
- Figure 6: is a collection of graphic formulae of compounds likely to be found in the film-forming material made according to Example 2 of this Specification.

The following techniques are used to measure various properties referred to in this specification:

### Gel Strength:

Gel strength is measured at 25°C using a 40 by 20mm blade in a Sheen Gel Strength Tester provided with 75mm diameter 250ml capacity cylindrical sample can. The procedure followed is described in Instruction Leaflet REF 414 Gel Strength Tester published by Sheen Instruments Limited of Teddington England. The samples should be allowed to stand at 25°C for 24 hours prior to performing the tests.

### Molecular Weights:

The molecular weights of the various polymeric materials were determined by gel permeation chromatography. A 0.5wt% solution of material in tetrahydrofuran was passed at lml/min through cylindrical columns 300mm long by 20mm diameter packed with a gel available from Polymer Laboratories Limited of Church Stretton, England and known as "Mixture D". The results obtained are calibrated against a polystyrene standard.

### Touch Dry time Measurement:

The time taken for a freshly applied coating to become dry to touch is measured by a sand deposition procedure as follows:

A coating 100µm thick is applied at 20°C to a horizontal glass sheet. A hopper having a small outlet in its base is filled with sand which then trickles through the outlet. The hopper is caused to traverse the coating at a speed of 25.4 mm/hour with sand trickling onto the coating. Initially the sand sticks to the coating which is still wet but as time passes, the coating dries and there comes a point when the sand ceases to stick to it. The time taken to reach this point is regarded as the touch dry time for the purposes of this specification. The point is easily detected by blowing the loose sand from the fully dried coating so as to leave a trail of stuck sand of a length from which the touch dry time is calculated by dividing by the speed of traverse.

This invention is illustrated by the following Examples of which A to C are comparative. The "parts" referred to in the Examples are parts by weight.

### EXAMPLE 1

**Coating Composition containing Film-Forming Material made by a Split Three Step Esterification:**

### a)i) First Parallel Operation: Step one:

Preparation of a mixture of precursor autoxidisable long oil non-alkyd esters by reacting together a polyol originally containing six hydroxyls (dipentaerythritol) and an autoxidisable hydrocarbylcarboxylic acid (tall oil fatty acid):

A 5 litre glass flask was fitted with a stirrer and a Dean and Stark reflux condenser operable so as to allow the escape of water from an azeotropic solvent. The flask was purged with nitrogen and then charged with:

| **Charge** | **Parts by Wt.** | **Wt%** |
|---|---|---|
| Tall Oil Fatty acid (TOFA) | 2444.7 | 83.4 |
| Dipentaerythritol | 428.2 | 14.6 |
| Xylene azeotropic solvent | 57.0 | 2.0 |

The contents of the flask were stirred and slowly heated to 240°C over a period of two hours. Esterification occurred in which TOFA esterified in the main about five of the hydroxyl groups of the dipentaerythritol and the water produced was removed from the xylene via the separator. Esterification was continued at 240°C (adding extra xylene to cool as necessary) until the acid value of the contents had fallen to 3mgKOH/g of solids content. The contents were then cooled to 120°C

### a)ii) First Parallel operation: Step two:

Preparation of an autoxidisable long oil non-alkyd polycarboxylate ester by reacting the product of Step one above with trimellitic anhydride:

To the contents coded to 120°C obtained above were added 107.9 parts by weight trimellitic anhydride. The contents were re-heated to 240°C whereupon esterification of the anhydride occurred and was continued until the acid value of the contents had fallen to between 8 and 10 mgKOH/g of solids content. Finally the separator was removed and the contents were subjected to vacuum distillation until the contents comprised from 99 to 99.5wt% of non-volatile material which were found to have a viscosity of 7 stokes at 25°C.

The contents included the autoxidisable long oil non-alkyd trimellitate ester in which the esterifying groups were penta (TOFAester) of dipentaerythrityl groups and which trimellitate ester had an Mz molecular weight of 11,500.

### b)i) Second Parallel Operation: Step one:

Preparation of a mixture of precursor long oil Alkyd Polymers:

The procedure described in paragraph a)i) above was followed but with the flask initially charged with the following:

| **Charge** | **Parts by Wt.** | **Wt%** |
|---|---|---|
| The fatty acid derived by the hydrolysis of Soya bean oil (SOFA) | 2102.3 | 73.3 |
| Pentaerythritol | 442.6 | 15.4 |
| Isophthalic acid | 264.5 | 9.2 |
| Xylene solvent | 60.0 | 2.1 |

### b)ii) Second Parallel Operation: Step two:

The procedure described in paragraph a)ii above was followed except that the trimellictic anhydride was of course added to the cooled product of b)i above and the amount added was 142.9 parts by weight instead of 109.7.

The contents included a trimellitic ester in which the esterifying groups were derived from alkyd polymers in which the alkyd polymer chain consisted of isophthalic acid esterified by pentaerythritol in which hydroxy groups of the pentaerythritol had reacted with moieties derived from SOFA. The trimellitic ester had an Mz molecular weight of 105,000 and a viscosity of 119 stokes when measured at 25°C as a 99 wt% solution in xylene.

### c) Making the film-forming material by blending the Mixtures of Esters made in Parts (a) and (b) above:

A blend of the penta (TOFA ester) of non-alkyd dipentaerythrityl trimellitate with the alkyd trimellitate was made by heating them each to 70 to 80°C and then mixing equal weights of the two together whilst maintaining the temperature at 70 to 80°C. The blend was a film-forming material having an Mz molecular weight of 98,000 with peaks at 1,800, 2,500 and in the range 5,000 to 6,000. 30 wt% of the film-forming material had a molecular weight in the range 1,500 to 3,500 and about 10wt% had a molecular weight of above 100,000. The Mz/Mn ratio was 5.17. The viscosity at 25°C measured on a 99 wt% solution in xylene was 18 stokes. The distribution of molecular weights obtained is illustrated by Figure 2.

### d) Polyamide-modification of Film-Forming Material made in Part (c) above: Step three:

Whilst the film-forming material made in Part (c) was still at a temperature of 70 to 80°C, a 25wt% portion of it was removed and 7 wt% (based on the weight of the portion) of a proprietary polyamide known as "Eurelon" 935 (supplied by Witco of Accrington, Lancashire, England) was stirred into the portion. The portion was stirred and heated to 220°C and maintained at that temperature for 3 hours. It was then cooled to ambient temperature. The polyamide was found to have reacted chemically with the trimellitate esters.

### e) Formulation of a Paint:

The following ingredients were added to a "Dispersomat" mixer at ambient temperature:

| **Ingredient** | **parts by wt.** |
|---|---|
| Unmodified Blend of Esters | 30 |
| Polyamide-Modified Blend of Esters | 11 |
| Rutile Titanium Dioxide Pigment | 34 |
| White Spirit Solvent | 4 |

The agitator blade of the mixer was operated at 1,500 rpm for 30 minutes. Stirring was continued and the following further ingredients were added:

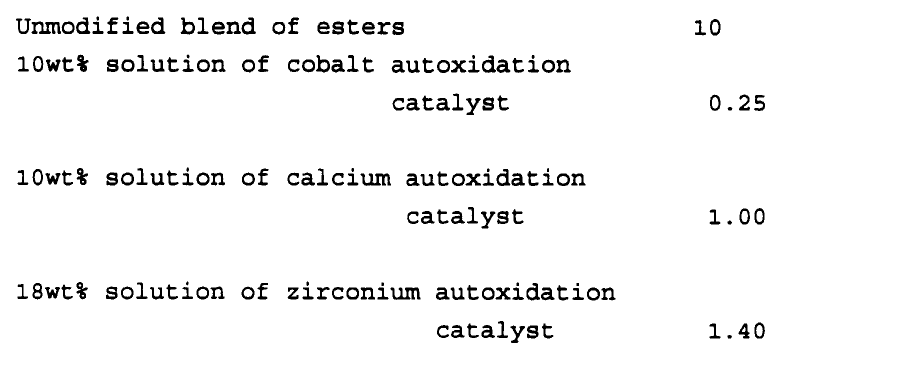

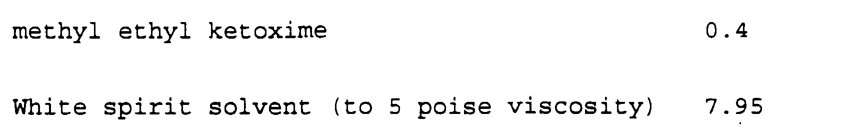

Gentle stirring was resumed for 5 minutes and produced a paint having a viscosity of 5 poise which therefore could be brushed onto an alkyd undercoated surface at 18°C as easily as conventional alkyd paint. The paint had a solids content of 85.7wt%.

### f) Testing the paint:

A primed surface was prepared by priming a hardboard surface with "Dulux" Trade white alkyd wood primer (available from ICI Paints of Slough, England) and then allowing the primed surface to age at ambient temperatures for seven days.

A coating 100µm thick of the paint was applied to the primed surface using a block spreader and the surface was mounted vertically. No sagging of the coating was observed during the period of 30 minutes following application which is the time when sagging is most likely to occur.

### EXAMPLE 1A

### Modified Example 1

The procedure of the second step of the first parallel operation of Example 1 (part a)ii) was performed on a larger scale and modified slightly by stopping the esterification of the trimellitic anhydride at an acid value of 9 to 11mg KOH/g instead of 8 to 10 mg KOH/g. In practice, this meant that the acid value was about 1mg KOH/g higher than that reached in Example 1. Otherwise the procedure for making the film-forming material was the same and the molecular weight distribution in the blend of esters obtained in part (c) is illustrated by Figure 2A. It will be seen from a comparison of Figures 2 and 2A that the molecular weight distributions are similar. The Mz molecular weight was 88,800, the peak molecular weight occurred at 2540, the Mz/Mw ratio was 4.6 and the viscosity at 25°C measured on a 99wt% solution in xylene was 20 stokes.

A paint was formulated as in Example 1 and thinned by adding enough white spirit to give a viscosity of 5 poise. The paint had a solids content of 85.7wt%. The paint was found to have a Touch Dry Time of 2.5 hours. In addition, coatings 100µm and 200µm thick were applied to a primed hardboard surface as in the Touch Dry Time Measurement Technique and the times taken for the coatings to dry all the way through were measured. They were 2.5 and 5 hours respectively at 20°C.

### EXAMPLE 2

Coating Composition containing Polycarboxylate Ester Component made by the simple (ie non-split) Three Step Esterification:

### a) Step one:

The procedure of paragraph a)i) of Example 1 was repeated except that the following were charged to the flask so that in effect the procedures of paragraphs a)i and a)ii were merged:

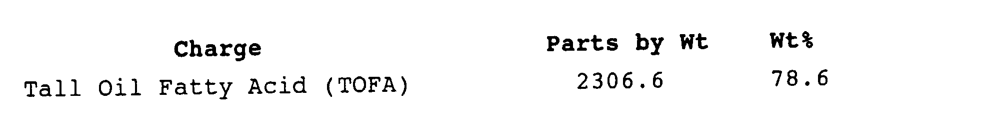

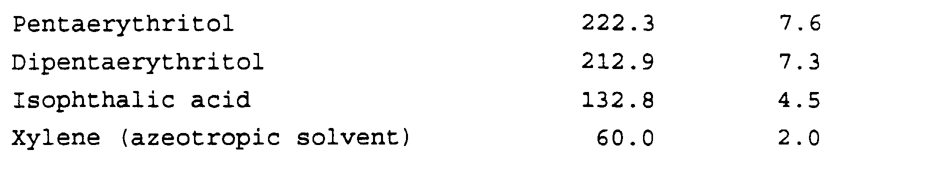

Also when the acid value had fallen to 3 mgKOH/g solids content, the amount of trimellitic anhydride added was 125.4 parts instead of 107.9. As before the contents were vacuum distilled to give 99.5wt% of non-volatile contents which were then found to have a viscosity at 25°C of 18 stokes. The contents obtained are believed to include a mixed trimellitate ester in which the esterifying groups are both polysubstituted etheralkyl and alkyd polymer groups in various proportions. The contents were suitable for use as a film-forming material. The film-forming material had a molecular weight of 35,000 with peaks at 1,680 and 2,500 and 30 wt% of the material had a molecular weight in the range 1500 to 3500. The Mz to Mw ratio was 2.9.

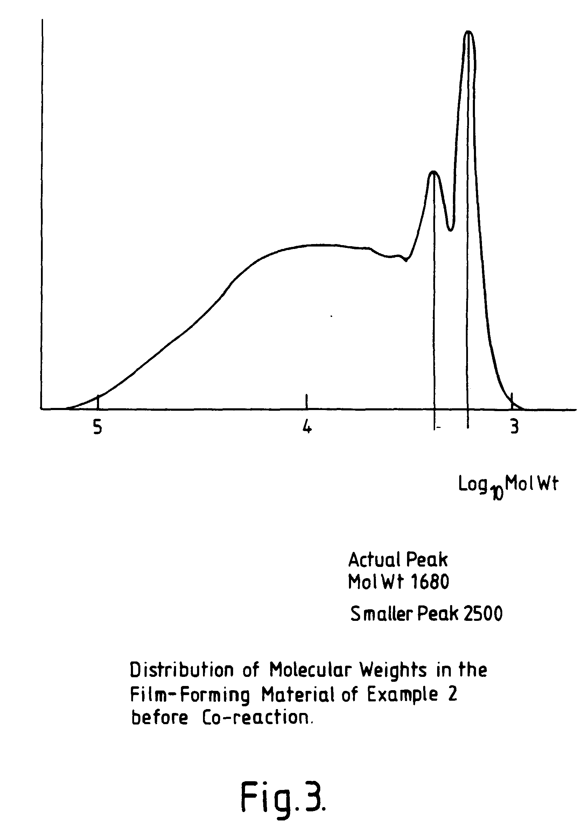

The distribution of molecular weights obtained is shown in Figure 3. A 25wt% portion of the contents were reacted with 7 wt% (based on the weight of the portion) of polyamide as in paragraph (d) of Example 1 and a paint was made according to paragraph (e). It was found that a brushable paint composition was obtained which had a viscosity of 5 poise and a solids content of 85.5wt%. When coated onto primed hardboard as in Example 1, the paint performed as well as conventional alkyd paints and produced a dried coat which was as hard and scratch resistant as a conventional alkyd coat after 48 hours.

### EXAMPLE 3

Coating Composition containing film-forming material in which the non-alkyd polycarboxylate ester is made using pairs of pentaerythritol molecules notionally coupled by a phthalate link in a split three step process.

### a)i) First Parallel Operation; Step one:

A 5 litre flask was fitted with a stirrer and a Dean and Stark separator and condenser operable so as to allow the removal of water from an azeotropic solvent. The flask was purged with nitrogen and charged with:

| Charge | Parts by weight | Wt% | Mol Ratio |
|---|---|---|---|
| Tall oil fatty acid (TOFA) | 2248.9 | 72.55 | 15 |
| Pentaerythritol | 421.9 | 13.61 | 6 |
| Phthalic anhydride | 229.9 | 7.42 | 3 |
| Xylene (azeotropic solvent) | 100.0 | 3.22 | - |

The contents of the flask were stirred and slowly heated (under nitrogen) to 230°C, over a period of 2 hours. Esterification occurred and the water produced was removed via the separator. Esterification was continued until the acid value of the esters had fallen below 5mg/KOH.gm of solids content.

### a)ii) First Parallel Operation; Step Two:

The esters obtained in a)i) above were cooled to 120°C and 99.3 parts (3.20wt%) of trimellitic anhydride were added. The mixture was re-heated to 230°C whereupon esterification of the anhydride occurred and was continued at this temperature (adding additional xylene as necessary) until the acid value of the system had fallen to between 8 and 10mgKOH/gm of solids content. Finally the separator was removed and the trimellitate ester subjected to vacuum distillation until the contents comprised from 99% to 99.5% of non-volatile material which was found to have a viscosity of 15 stokes at 25°C. The trimellitate ester comprised esterifying moieties which were penta TOFA esters of dipentaerythrityl phthalate having a formula indicated as shown below.

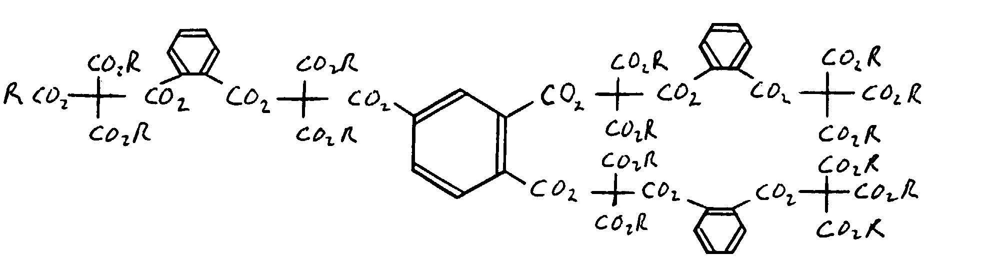

### b) Second Parallel Operation: Steps one and two:

Steps one and two of the second parallel operation of Example 1 were repeated.

### c) Making the film-forming material by blending the esters:

The esters obtained according to parts a) and b) above were blended as in part c) of Example 1 except that the blend contained 65wt% of the trimellitate ester made according to part a) and 35wt% of the alkyd trimellitate ester made according to part b). The blend was a film-forming material having an Mz of 2.8 with peaks at 1,800, 2,500 and in the range 5,000 to 6,000. 27wt% of the material had a molecular weight in the range 1,500 to 3,500 and the Mz to Mw ratio was 5.17. The material had a viscosity at 25°C in a 99wt% solution in xylene of 33 stokes.

In the third step of the process, a portion of the film-forming material was modified by polyamide as in Example 1 and then a paint was made also as in Example 1. The paint had a solids content of 85wt%. Coatings 100µm thick of the paint were sag-resistant and dried as quickly as those of conventional paints.

### COMPARATIVE EXAMPLES A AND B

### Importance of Co-Reacted Polyamide

A film-forming material was made according to Example 1 but the material was not co-reacted with polyamide. Instead, in Comparative Example A, no polyamide at all was added to the blend and in Comparative Example B, a conventional thixotropic agent was merely stirred into the blend. The conventional thixotropic agent was made by reacting a conventional autoxidisable alkyd polymer with 5wt% (based on the weight of the polymer) of a polyamide available as "Versamid" 930 from Cray Valley Products of Machen, Wales.

Coating compositions made using the film-forming materials from Example A sag badly within 30 minutes of being applied 100µm thick to a primed hardboard surface which is hung vertically immediately after application of the coating composition.

In the case of Example B, brushable coating compositions containing less than 15wt% white spirit could not be obtained. The compositions did not become brushable until at least 25 wt% white spirit had been added.

### COMPARATIVE EXAMPLE C

### Need for Alkyd Trimellitate:

The procedure of Example 1 was repeated except that the addition of trimellitic anhydride was omitted from the procedure of paragraphs b)i and ii. The coating compositions sagged badly within 30 minutes when applied 100µm thick to a primed hardboard surface which was hung vertical immediately after application of the coating composition.

## Claims

1. An environmentally friendly autoxidisable alkyd coating composition containing autoxidation catalyst and film-forming material containing autoxidisable alkyd polymer moieties and in which at least a portion of the film-forming material has been chemically co-reacted with polyamide or a polyamine/polyisocyanate combination to produce a co-reaction product wherein
a) before the co-reaction, the film-forming material has a Z average molecular weight (as determined using gel permeation chromatography) of at least 30,000, a viscosity of less than 34 stokes (ie 10⁻⁴m²/s) when measured, using the bubble tube technique, at 25°C as a 99wt% solution in xylene and a non-uniform distribution of molecular weights (as determined by gel permeation chromatography) which has a peak in the range 1,500 to 3,500 and where at least 25wt% of the film-forming material has a molecular weight in the range 1,500 to 3,500 and
b) moieties derived from the co-reacted polyamide or polyamine/polyisocyanate combination amount to 2 to 15wt% of portion which has been co-reacted.

2. A coating composition as claimed in Claim 1 wherein the composition contains less than 30wt% of volatile organic solvent.

3. A coating composition as claimed in Claim 1 or Claim 2 wherein the Z average molecular weight of the film-forming material before co-reaction is above 50,000.

4. A coating composition as claimed in any one of Claims 1, 2 or 3 wherein before the co-reaction the film-forming material contains at least 2wt% of material having a molecular weight of above 100,000.

5. A coating composition as claimed in any one of the preceding Claims, in which the film-forming material includes esters of a polycarboxylic acid which contains at least three carboxylic acid groups and/or esters of an anhydride of such a polycarboxylic acid wherein the esterifying moieties are chosen from
a) alkyd polymer moieties,
b) moieties derived from a substituted polyol or substituted polyol dicarboxylate containing at least five hydroxyls prior to substitution up to all but one of which hydroxyls per polyol molecule have been substituted by autoxidisable hydrocarbylcarbonyloxy moieties and optionally
c) moieties derived from a substituted polyol containing three or four hydroxyls prior to substitution of which one or two per alcohol molecule have been substituted by autoxidisable hydrocarbylcarbonyloxy moieties.

6. A coating composition according to Claim 5 which contains esters of polycarboxylic acid and/or anhydride which are esters in which the esterifying moieties are solely alkyd polymer moieties.

7. A coating composition as claimed in Claim 5 or Claim 6 which contains esters of the polycarboxylic acid and/or anhydride which are non-alkyd esters in which the esterifying moieties are solely moieties derived from the substituted polyols or polyol dicarboxylates.

8. A coating composition as claimed in Claim 6 and Claim 7 wherein the film-forming material comprises a blend of
a) polycarboxylate esters as specified in Claim 6 with
b) polycarboxylate esters as specified in Claim 7
wherein the weight ratio of (b) to (a) in the blend is from 3:1 to 0.5:1.

9. A film-forming material in which the film-forming material includes esters of a polycarboxylic acid which contain at least three carboxylic acid groups and/or esters of an anhydride of such a polycarboxylic acid and which have molecular and viscosity properties as specified in paragraph a) of Claim 1 above, wherein the esterifying moieties are chosen from
a) alkyd polymer moieties,
b) moieties derived from either a substituted polyol or substituted polyol dicarboxylate containing at least five hydroxyls prior to substitution up to all but one of which hydroxyls per polyol or polyol dicarboxylate molecule have been substituted by autoxidisable hydrocarbylcarbonyloxy moieties and optionally
c) moieties derived from a substituted polyol containing three or four hydroxyls prior to substitution of which one or two per polyol molecule have been substituted by autoxidisable hydrocarbylcarbonyloxy moieties
and a portion amounting to 5 to 15wt% of the film-forming material has been modified by co-reaction with polyamide or polyamine/polyisocyanate combination in an amount such that from 3 to 15wt% of the portion after modification consists of moieties derived from the polyamide or polyamine/polyisocyanate combination.

10. A three step process for making a film-forming material as defined in Claims 1 to 8 wherein the first step comprises making a precursor mixture of esters by reacting together a mixture of the following reactants:
a) an aromatic dicarboxylic acid or its anhydride,
b)
i) either a polyol containing at least five hydroxylsoptionally with a polyol containing three or four hydroxyols or
ii) a notionally coupled pair of polyols each of which contains at least four hydroxyls prior to coupling and which are coupled by a dicarboxylate link and
c) an autoxidisable hydrocarbylcarboxylic acid containing 12 to 30 carbon atoms,
the second step comprises reacting together the precursor esters and a polycarboxylic acid and/or an anhydride of such an acid and
the third step comprises co-reacting a portion amounting to 5 to 15wt% of the film-forming material with polyamide or polyamine/polyisocyanate combination in an amount such that from 3 to 15wt% of the portion after modification consists of moieties derived from the polyamide or polyamine/polyisocyanate combination.

11. A modified process according to Claim 10 wherein the first two steps are split into two separate operations such that
a) in the first step of the first operation, the following are reacted together to make a precursor mixture of alkyd esters,
i) aromatic dicarboxylic acid,
ii) polyol containing at least three hydroxyl groups and
iii) autoxidisable hydrocarbylcarboxylic acid and the mixture of alkyd esters formed is then reacted in the second step with the polycarboxylic acid or anhydride and
b) in the first step of the second operation, either polyol containing at least five hydroxyl groups or the notionally coupled pair of polyols containing at least four hydroxyl groups are reacted with the autoxidisable hydrocarbylcarboxylic acid to form a mixture of precursor non-alkyd esters which is then reacted in the second step with the polycarboxylic acid or anhydride
and then the products of the first and second operations are blended together to produce a film-forming material.

## Patentansprüche

1. Umweltfreundliche selbstoxidierbare Alkyd-Überzugszusammensetzung, die einen Selbstoxidations-Katalysator und ein filmbildendes Material enthält, das selbstoxidierbare Alkyd-Polymerreste enthält, und in der zumindest ein Teil des filmbildenden Materials mit einem Polyamid oder mit einer Polyamin/Polyisocyanat-Kombination unter Erhalt eines Co-Reaktionsproduktes chemisch co-reagiert wurde, wobei
(a) vor der Co-Reaktion das filmbildende Material ein Z-mittleres Molekulargewicht (durch Anwendung der Gelpermeationschromatographie bestimmt) von mindestens 30 000, eine Viskosität von weniger als 34 Stokes (d.h. 10⁻⁴ m²/s), bei 25°C bei einer 99gew.-%igen Lösung in Xylol unter Anwendung der Blasenrohrtechnik gemessen, und eine ungleichmäßige Molekulargewichtsverteilung (durch Gelpermeationschromatographie bestimmt) mit einem Peak im Bereich von 1 500 bis 3 500 hat, wobei mindestens 25 Gew.-% des filmbildenden Materials ein Molekulargewicht im Bereich 1 500 bis 3 500 haben und
(b) die Reste, die von dem co-reagierten Polyamid oder der Polyamin-Polyisocyanat-Kombination stammen, 2 bis 15 Gew.-% des Anteils ausmachen, der co-reagiert wurde.

2. Überzugszusammensetzung nach Anspruch 1, wobei die Zusammensetzung weniger als 30 Gew.-% flüchtiges organisches Lösungsmittel enthält.

3. Überzugszusammensetzung nach Anspruch 1 oder 2, wobei das Z-mittlere Molekulargewicht des filmbildenden Materials vor der Co-Reaktion oberhalb 50 000 liegt.

4. Überzugszusammensetzung nach einem der Ansprüche 1, 2 oder 3, wobei vor der Co-Reaktion das filmbildende Material mindestens 2 Gew.-% Material mit einem Molekulargewicht oberhalb 100 000 enthält.

5. Überzugszusammensetzung nach einem der vorhergehenden Ansprüche, wobei das filmbildende Material Ester einer Polycarbonsäure umfaßt, die mindestens 3 Carbonsäure-Gruppen enthält, und/oder Ester eines Anhydrids einer derartigen Polycarbonsäure, wobei die Veresterungsreste ausgewählt sind unter:
a) Alkyd-Polymer-Resten,
b) Resten, die von einem substituierten Polyol oder von einem substituierten Polyoldicarboxylat stammen, das mindestens fünf Hydroxy-Gruppen vor der Substitution enthält, von denen alle bis auf eine der Hydroxy-Gruppen pro Polyol-Molekül durch selbstoxidierbare Hydrocarbylcarbonyloxy-Reste substituiert sein können, und gegebenenfalls
c) Reste, die von einem substituierten Polyol stammen, das 3 oder 4 Hydroxy-Gruppen vor der Substitution enthält, von denen eine oder zwei pro Alkohol-Molekül durch selbstoxidierbare Hydrocarbylcarbonyloxy-Reste substituiert sind.

6. Überzugszusammensetzung nach Anspruch 5, die Ester von Polycarbonsäure und/oder -anhydrid enthält, bei denen es sich um Ester handelt, in denen die Veresterungsgruppen nur Alkyd-Polymer-Reste sind.

7. Überzugszusammensetzung nach Anspruch 5 oder 6, die Ester der Polycarbonsäure und/oder des -anhydrids enthält, bei denen es sich um Nicht-Alkyd-Ester handelt, in denen die Veresterungsreste nur Reste sind, die von den substituierten Polyolen oder Polyoldicarboxylaten stammen.

8. Überzugszusammensetzung nach Anspruch 6 und 7, wobei das filmbildende Material ein Gemisch aufweist aus
a) Polycarboxylatestern, wie in Anspruch 6 spezifiziert, und
b) Polycarboxylatestern, wie in Anspruch 7 spezifiziert,
wobei das Gewichtsverhältnis von (b) zu (a) in dem Gemisch 3:1 bis 0,5:1 beträgt.

9. Filmbildendes Material, wobei das filmbildende Material folgendes umfaßt: Ester einer Polycarbonsäure, die mindestens 3 Carbonsäure-Gruppen enthält, und/oder Ester eines Anhydrids einer derartigen Polycarbonsäure, welche die in Absatz a) des obigen Anspruchs 1 spezifizierten Molekül- und Viskositätseigenschaften haben, wobei die Veresterungsreste ausgewählt sind unter:
a) Alkyd-Polymer-Resten,
b) Resten, die entweder von einem substituierten Polyol oder von einem substituierten Polyoldicarboxylat stammen, das mindestens fünf Hydroxy-Gruppen vor der Substitution enthält, von denen alle bis auf eine der Hydroxy-Gruppen pro Polyol- oder Polyoldicarboxylat-Molekül durch selbstoxidierbare Hydrocarbylcarbonyloxy-Reste substituiert sein können, und gegebenenfalls
c) Reste, die von einem substituierten Polyol stammen, das 3 oder 4 Hydroxy-Gruppen vor der Substitution enthält, von denen eine oder zwei pro Polyol-Molekül durch selbstoxidierbare Hydrocarbylcarbonyloxy-Reste substituiert sind,
wobei ein Teil in einer Menge von 5 bis 15 Gew.-% des filmbildenden Materials durch Co-Reaktion mit einem Polyamid oder einer Polyamin/Polyisocyanat-Kombination in einer solchen Menge modifiziert ist, das 3 bis 15 Gew.-% des Teils nach der Modifikation aus Resten besteht, die von dem Polyamid oder der Polyamin/Polyisocyanat-Kombination stammen.

10. Dreistufiges Verfahren zur Herstellung eines filmbildenden Materials nach den Ansprüchen 1 bis 8, wobei in der ersten Stufe ein Vorläufergemisch aus Estern hergestellt wird, indem ein Gemisch aus den folgenden Reaktanten umgesetzt wird:
a) einer aromatischen Dicarbonsäure oder deren Anhydrid,
b)
i) entweder einem Polyol, das mindestens fünf Hydroxy-Gruppen enthält, und zwar gegebenenfalls mit einem Polyol, das drei oder vier Hydroxy-Gruppen enthält, oder
ii) einem hypothetisch gekuppelten Paar aus Polyolen, das jeweils mindestens vier Hydroxy-Gruppen vor der Kupplung enthält, und die durch eine Dicarboxylat-Verknüpfung gekuppelt sind, und
c) einer selbstoxidierbaren Hydrocarbylcarbonsäure, die 12 bis 30 Kohlenstoffatome enthält,
wobei in der zweiten Stufe die Vorläuferester und eine Polycarbonsäure und/oder ein Anhydrid einer derartigen Säure umgesetzt werden und
in der dritten Stufe ein Teil in einer Menge von 5 bis 15 Gew.-% des filmbildenden Materials mit einem Polyamid oder mit einer Polyamin/Polyisocyanat-Kombination in einer solchen Menge co-reagiert wird, das 3 bis 15 Gew.-% des Teils nach der Modifikation aus Resten bestehen, die von dem Polyamid oder der Polyamin/Polyisocyanat-Kombination stammen.

11. Modifiertes Verfahren nach Anspruch 10, wobei die ersten zwei Stufen in zwei separate Vorgänge aufgetrennt sind, und zwar derart, daß
a) in der ersten Stufe des ersten Vorgangs zur Herstellung eines Vorläufergemisches aus Alkydestern folgendes umgesetzt wird:
i) eine aromatischen Dicarbonsäure,
ii) ein Polyol, das mindestens drei Hydroxy-Gruppen enthält, und
iii) eine selbstoxidierbare Hydrocarbylcarbonsäure, wobei das gebildete Gemisch aus Alkydestern dann in der zweiten Stufe mit der Polycarbonsäure oder dem -anhydrid umgesetzt wird, und
b) in der ersten Stufe des zweiten Vorgangs entweder ein Polyol, das mindestens fünf Hydroxy-Gruppen enthält, oder das hypothetisch gekuppelte Paar aus Polyolen, das mindestens vier Hydroxy-Gruppen enthält, mit der selbstoxidierbaren Hydrocarbylcarbonsäure umgesetzt wird, so daß ein Gemisch aus Vorläufer-Nicht-Alkydestern gebildet wird, das dann in der zweiten Stufe mit der Polycarbonsäure oder dem -anhydrid umgesetzt wird,
woraufhin die Produkte aus dem ersten und dem zweiten Vorgang unter Bildung eines filmbildenden Materials zusammengemischt werden.

## Revendications

1. Composition de revêtement alkyd auto-oxydable sans danger pour l'environnement contenant un catalyseur d'auto-oxydation et une matière filmogène contenant des groupements de polymère alkyd auto-oxydables et dans laquelle au moins une portion de la matière filmogène a été soumise à une co-réaction chimique avec un polyamide ou une association polyamine/polyisocyanate pour former un produit de co-réaction, dans laquelle
a) avant co-réaction, la matière filmogène a une moyenne Z du poids moléculaire (déterminée par chromatographie de perméation sur gel) d'au moins 30 000, une viscosité inférieure à 34 stokes (c'est-à-dire 10⁻⁴ m²/s) lorsqu'elle est mesurée, au moyen de la technique utilisant un tube à bulles, à 25°C sur une solution à 99 % en poids dans le xylène et une distribution non uniforme des poids moléculaires (déterminée par chromatographie de perméation sur gel) qui présente un pic dans l'intervalle de 1500 à 3500, et dans laquelle au moins 25 % en poids de la matière filmogène a un poids moléculaire compris dans l'intervalle de 1500 à 3500, et
b) les groupements dérivés du polyamide ou de l'association polyamine/polyisocyanate ayant subi une co-réaction représentent 2 à 15 % en poids de la portion qui a subi la co-réaction.

2. Composition de revêtement suivant la revendication 1, qui contient moins de 30 % en poids de solvant organique volatil.

3. Composition de revêtement suivant la revendication 1 ou la revendication 2, dans laquelle la moyenne Z du poids moléculaire de la matière filmogène, avant co-réaction, est supérieure à 50 000.

4. Composition de revêtement suivant l'une quelconque des revendications 1, 2 et 3, dans laquelle, avant co-réaction, la matière filmogène contient au moins 2 % en poids d'une matière ayant un poids moléculaire supérieur à 100 000.

5. Composition de revêtement suivant l'une quelconque des revendications précédentes, dans laquelle la matière filmogène comprend des esters d'un acide polycarboxylique qui contient au moins trois groupes acide carboxylique et/ou des esters d'un anhydride d'un tel acide polycarboxylique, dans laquelle les groupements estérifiants sont choisis entre
a) des groupements de polymère alkyd,
b) des groupements dérivés d'un polyol substitué ou d'un dicarboxylate de polyol substitué contenant au moins cinq groupes hydroxyle avant substitution jusqu'à ce que la totalité sauf un de ces groupes hydroxyle par molécule de polyol ait été substituée par des groupements hydrocarbyl-carbonyloxy auto-oxydables, et, facultativement,
c) des groupements dérivés d'un polyol substitué contenant trois ou quatre groupes hydroxyle avant substitution, dont un ou deux par molécule d'alcool ont été substitués par des groupements hydrocarbyl-carbonyloxy auto-oxydables.

6. Composition de revêtement suivant la revendication 5, qui contient des esters d'un acide et/ou d'un anhydride polycarboxylique qui sont des esters dans lesquels les groupements estérifiants sont seulement des groupements de polymère alkyd.

7. Composition de revêtement suivant la revendication 5 ou la revendication 6, qui contient des esters de l'acide et/ou l'anhydride polycarboxylique qui sont des esters non alkyd dans lesquels les groupements estérifiants sont seulement des groupements dérivés des polyols ou dicarboxylates de polyols substitués.

8. Composition de revêtement suivant la revendication 6 ou la revendication 7, dans laquelle la matière filmogène comprend un mélange
a) d'esters polycarboxyliques spécifiés dans la revendication 6 avec
b) des esters polycarboxyliques spécifiés dans la revendication 7,
le rapport pondéral de (b) à (a) dans le mélange étant compris dans l'intervalle de 3:1 à 0,5:1.

9. Matière filmogène, qui comprend des esters d'un acide polycarboxylique qui contient au moins trois groupes acide carboxylique et/ou des esters d'un anhydride d'un tel acide polycarboxylique et qui a des propriétés de poids moléculaire et de viscosité spécifiées dans le paragraphe a) de la revendication 1 ci-dessus, les groupements estérifiés étant choisis entre
a) des groupements de polymère alkyd
b) des groupements dérivés d'un polyol substitué ou d'un dicarboxylate de polyol substitué contenant au moins cinq groupes hydroxyle avant substitution jusqu'à ce que la totalité sauf un de ces groupes hydroxyle par molécule de polyol ou de dicarboxylate de polyol ait été substituée par des groupements hydrocarbyl-carbonyloxy auto-oxydables et, facultativement,
c) des groupements dérivés de polyol substitué contenant trois ou quatre groupes hydroxyle avant substitution, dont un ou deux par molécule de polyol ont été substitués par des groupements hydrocarbyl-carbonyloxy auto-oxydables, et une portion s'élevant à une valeur de 5 à 15 % en poids de la matière filmogène a été modifiée par co-réaction avec un polyamide ou une association polyamine/polyisocyanate en une quantité telle que 3 à 15 % en poids de la portion après modification consistent en groupements dérivés du polyamide ou de l'association polyamine/polyisocyanate.

10. Procédé en trois étapes pour la préparation d'une matière filmogène répondant à la définition suivant les revendications 1 à 8, dans lequel la première étape comprend la préparation d'un mélange précurseur d'esters en faisant réagir ensemble un mélange des corps réactionnels suivants :
a) un acide dicarboxylique aromatique ou son anhydride,
b)
i) un polyol contenant au moins cinq groupes hydroxyle, facultativement avec un polyol contenant trois ou quatre groupes hydroxyle, ou
ii) une paire, couplée de manière fictive, de polyols dont chacun contient au moins quatre groupes hydroxyle avant couplage et qui sont couplés par une liaison dicarboxylate, et
c) un acide hydrocarbyl-carboxylique auto-oxydable contenant 12 à 30 atomes de carbone,
la deuxième étape comprend la réaction conjointe des esters précurseurs et d'un acide polycarboxylique et/ou d'un anhydride d'un tel acide, et
la troisième étape comprend la co-réaction d'une portion s'élevant à une valeur de 5 à 15 % en poids de la matière filmogène avec un polyamide ou une association polyamine/polyisocyanate en une quantité telle que 3 à 15 % en poids de la portion, après modification, consistent en groupements dérivés du polyamide ou de l'association polyamine/polyisocyanate.

11. Procédé modifié suivant la revendication 10, dans lequel les deux premières étapes sont divisées en deux opérations distinctes de telle sorte que
a) dans la première étape de la première opération, les constituants suivants soient soumis à une réaction mutuelle pour préparer un mélange précurseur d'esters alkyd,
i) un acide dicarboxylique aromatique,
ii) un polyol contenant au moins trois groupes hydroxyle, et
iii) un acide hydrocarbyl-carboxylique auto-oxydable, et le mélange d'esters alkyd formé est ensuite soumis à une réaction, dans la seconde étape, avec l'acide ou l'anhydride polycarboxylique, et
b) dans la première étape de la seconde opération, un polyol contenant au moins cinq groupes hydroxyle ou la paire, couplée de manière fictive, de polyols contenant au moins quatre groupes hydroxyle est amené à réagir avec l'acide hydrocarbyl-carboxylique auto-oxydable pour former un mélange d'esters non alkyd précurseurs qui est ensuite amené à réagir dans la seconde étape avec l'acide ou l'anhydride polycarboxylique,
puis les produits des première et seconde opérations sont mélangés l'un à l'autre pour produire une matière filmogène.
